Europäisches Patentamt

European Patent Office

Office européen des brevets

(11) Veröffentlichungsnummer: **0 330 705 B1**

(19)

(12) **EUROPÄISCHE PATENTSCHRIFT**

(45) Veröffentlichungstag der Patentschrift: **11.03.92**

(21) Anmeldenummer: **88102981.3**

(22) Anmeldetag: **29.02.88**

(51) Int. Cl.5: **B29C 71/04**, B01J 19/14, B05D 3/06

(54) **Verfahren und Vorrichtung zur Behandlung von Gegenständen mit Elektronenstrahlung und/oder elektromagnetischer Strahlung unter Schutzgas.**

(43) Veröffentlichungstag der Anmeldung:
06.09.89 Patentblatt 89/36

(45) Bekanntmachung des Hinweises auf die Patenterteilung:
11.03.92 Patentblatt 92/11

(84) Benannte Vertragsstaaten:
AT BE CH DE ES FR LI NL

(56) Entgegenhaltungen:
FR-A- 2 157 915
US-A- 4 118 873

ADHÄSION, Band 25, Nr. 3, März 1981, Seiten 152-155, Berlin, DE; D. FRENCH et al.: "A 1.4 meter electron curing system for the finishing of sheet wood products"

Idem

(73) Patentinhaber: **Linde Aktiengesellschaft Abraham-Lincoln-Strasse 21 W-6200 Wiesbaden(DE)**

(72) Erfinder: **Van Witzenburg, Guy, Ing.grad.(FH) 145, Chaussée de la Grande Espinette B-1640 Rhode St-Genese(BE)**

(74) Vertreter: **Schaefer, Gerhard, Dr. Linde Aktiengesellschaft Zentrale Patentabteilung W-8023 Höllriegelskreuth(DE)**

**Beschreibung**

Die Erfindung betrifft ein Verfahren sowie eine Vorrichtung zur Behandlung von aufeinanderfolgend eine Durchlaufeinrichtung durchlaufenden Einzelgegenständen mit Elektronenstrahlung und/oder elektromagnetischer Strahlung unter Schutzgas, wobei die Durchlaufvorrichtung eine Eingangs-, eine Ausgangs- und eine Bestrahlungszone besitzt.

Kunststoffe können durch den Einfluß energiereicher Strahlung im Molekülaufbau verändert werden. Es bestehen z.B. folgende Möglichkeiten: Anregung einer Polymerisation durch Strahlung, Spaltung von Kettenmolekülen, Bildung von Seitenketten, Quervernetzung von Ketten etc.. Durch solche Vorgänge können Materialeigenschaften verändert werden, bei Lacken z.B. die Korrosionsbeständigkeit und Abriebfestigkeit. Eine Strahlungsbehandlung muß jedoch, zur Vermeidung von schädlichen Einflüssen z.B. von Sauerstoff, in einer Schutzgasatmosphäre im Bereich der Bestrahlungszone durchgeführt werden.

Es ist bekannt, mit Hilfe eines Gasgenerators durch Verbrennung von z.B. Erdgas oder Propan ein Schutzgas herzustellen und damit den Luftsauerstoff aus dem Bestrahlungsbereich einer Bestrahlungsanlage durch ständiges Einführen von Schutzgas in die Anlage zu verdrängen. Dabei besteht aber die Bedingung, daß das Schutzgas selbst nur einen geringen Anteil an Sauerstoff und auch Kohlenmonoxid enthalten darf. Nur mit einwandfrei arbeitenden Gasgeneratoren ist diese Bedingung einzuhalten. Zur Kontrolle und um größere Mengen Ausschuß zu vermeiden, ist aber eine Überwachung des Schutzgases mit Detektoren unumgänglich. Das Betreiben einer derartigen Bestrahlungsvorrichtung setzt also die Anschaffung und den sorgfältigen Betrieb einer Gasgeneratoranlage voraus.

Als Alternative zur Schutzgasherstellung-und versorgung mit einem Gasgenerator ist auch eine Schutzgasversorgung mit aus Speicherbehältern entnehmbarem Schutzgas möglich.

Aus der US-PS 4,118,873, die das Aushärten von Kunststoffen mit Strahlung betrifft, ist z.B. ein Verfahren zum Inertisieren der Atmosphäre über einem bewegten Werkstück mit Stickstoff, Argon oder Kohlendioxyd bekannt, bei dem das inerte Gas in eine zugehörige Tunnelanlage mit einer solchen Geschwindigkeit eingeführt wird, daß turbulente Bedingungen in der Gasatmosphäre im Tunnel und insbesondere über den einlaufenden Werkstücken entstehen. Dies bewirkt, daß einerseits dem Eintrag von Sauerstoff in die Tunnelanlage durch die einlaufenden Werkstücke entgegengewirkt wird und andrerseits eine hohe Durchlaufgeschwindigkeit der Werkstücke durch die Tunnelanlage möglich ist.

Weiters ist aus Adhäsion, Vol. 25 (März 1981), S.152 bis 155, ein Verfahren zur Elektronenstrahlbehandlung in einer Durchlaufanlage bekannt, bei dem die Schutzgasatmosphäre durch Zufuhr einer konstanten Rate an Schutzgas in die Anlage erzeugt wird, wobei dies durch Sauerstoffanalysatoren überwacht wird. Basierend darauf kann die Schutzgaszufuhr bei Bedarf geeignet nachgeregelt werden. Bei bekannten Verfahren werden also im normalen Betrieb zwar minimierte aber konstante Mengen Schutzgas in die jeweiligen Anlagen eingeführt.

Die Aufgabenstellung dem vorliegenden Erfindung besteht nun darin, nochmals ein sowohl zuverlässiges wie auch wirtschaftliches Verfahren zur Herstellung einer Schutzgasatmosphäre anzugeben.

Diese Aufgabe wird dadurch gelöst, daß zu einer konstanten Basismenge an Schutzgas phasenweise, in Abhängigkeit vom Durchlauf der zu bestrahlenden Gegenstände durch die Durchlaufvorrichtung, eine Zusatzmenge an Schutzgas in der Weise zugeführt wird, daß eine Phase der Zugabe an Zusatzmenge vor dem Einlaufen der Gegenstände in die und -falls es sich durch die Geometrie der Gegenstände ergibt -auch vor dem Auslaufen der zu bestrahlenden Gegenstände aus der Bestrahlungszone ausgeführt wird, wobei Basismenge und Zusatzmenge in einem Mengenverhältnis von 1 : 1 bis 1 : 0.3 zueinander stehen.

Durch die erfindungsgemäße Schutzgaszufuhr wird der Bedarf an Schutzgas minimiert. Im Vergleich zu einer konstanten Schutzgaszugabe kann die benötigte Gasmenge wesentlich gesenkt werden. Bei einer Gasversorgung aus Speicherbehältern ergibt sich zudem eine erhebliche Erhöhung der Betriebssicherheit gegenüber der Schutzgasversorgung mit Gasgenerator. Der Erfindung liegt die Erkenntnis zugrunde, daß durch die Gegenstände, die die Anlage durchlaufen, Luft in dieselbe eingeführt wird, welche einen Anstieg des Schutzgas-Sauerstoffgehalts bewirkt. Deshalb ist die Zugabe von zusätzlichen Mengen Schutzgas zu bestimmten Zeitpunkten des Durchlaufs der Gegenstände vorteilhaft und ausreichend, die notwendige Reinheit der Schutzgasatmosphäre zu erhalten.

Geeignete Bedingungen bestehen dabei dann, wenn Basismenge und Zusatzmenge in einem Verhältnis von 1 : 1 bis 1 : 0,3 zugeführt werden. Damit ist sowohl die Wirtschaftlichkeit des Verfahrens als auch die Schutzgasreinheit sichergestellt.

Die Dauer einer Zugabephase ist von mehreren Parametern abhängig. Die wichtigsten davon sind: Länge und Dichtigkeit der Eingangs- und Ausgangszone, die Durchlaufgeschwindigkeit, Form und Abmessungen des zu behandelnden Gegenstandes. Günstige Bedingungen bestehen bei einer Zeitdauer von etwa 5 bis 40 % der Durchlaufzeit eines Gegenstandes durch die Anlage.

In einer besonders vorteilhaften Ausgestaltung des erfindungsgemäßen Verfahrens wird die Zufuhr der Zusatzmenge Schutzgas durch Signalgeber ausgelöst, die von den zu bestrahlenden Gegenständen bei ihrem Durchlauf durch die Vorrichtung ausgelöst werden. In bestimmten Fällen kann die Zufuhr der Zusatzmenge Schutzgas mehrmals durch einen Signalgeber ausgelöst werden, z.B. beim Eintreffen am und beim Verlassen des Signalgebers.

Besonders geeignet als Schutzgas ist Stickstoff, der vergleichsweise kostengünstig in Speicherbehältern erhältlich ist. Es sind aber auch andere Inertgase, z.B. Argon, einsetzbar.

Eine zur Durchführung des Verfahrens geeignete Durchlaufvorrichtung mit einer Eingangs-, einer Ausgangs- und einer Bestrahlungszone ist dadurch gekennzeichnet, daß in der Eingangszone und/oder der Ausgangszone Signalgeber zur Auslösung der Zugabe der Zusatzmenge an Schutzgas angeordnet sind. Mit diesen Signalgebern wird die Schutzgaszugabe gesteuert und so der erfindungsgemäße Verfahrensablauf automatisiert.

Besonders günstig ist die Anordnung eines Gasverteilers direkt benachbart zur Bestrahlungszone oder eines Gasverteilers unmittelbar vor und eines Gasverteilers unmittelbar nach dem Bestrahlungsbereich, durch die das Schutzgas in die Durchlaufvorrichtung eingeleitet wird.

Als besonders geeignet hat sich ein Gasverteiler erwiesen, der aus einem Gehäuse besteht, das nach unten durch eine gasdurchlässige Sintermetallplatte abgeschlossen ist, wobei in dem Gehäuse ein Verteilerrohr in einem nach oben geöffneten U-förmigen Verteilerkanal angeordnet ist, und der Verteilerkanal nach oben und seitlich mit Abstand zum Gehäuse angeordnet ist. Das Verteilerrohr besitzt nach unten gerichtete Öffnungen, durch die das Gas in das Gehäuse eingeleitet wird, welches dann durch den Verteilerkanal geführt nach oben fließt, bis es schließlich durch den seitlichen Abstand des Kanals vom Gehäuse nach unten durch die Sintermetallplatte wieder aus dem Verteiler austritt.

Zum Schutz gegen das Eindringen von Sauerstoff von der Ausgangsseite ist die Anordnung von Abschließelementen in der Ausgangszone der Durchlaufvorrichtung vorteilhaft.

Anhand der folgenden Zeichnungen soll die Erfindung beispielhaft erläutert werden.

Es zeigen:

Figur 1    erfindungsgemäße Durchlaufbestrahlungsanlage mit externer Gasversorgung,
Figur 2    Gasverteiler in Vorder- und Seitensicht,
Figur 3    Doppelanordnung von Gasverteilern.

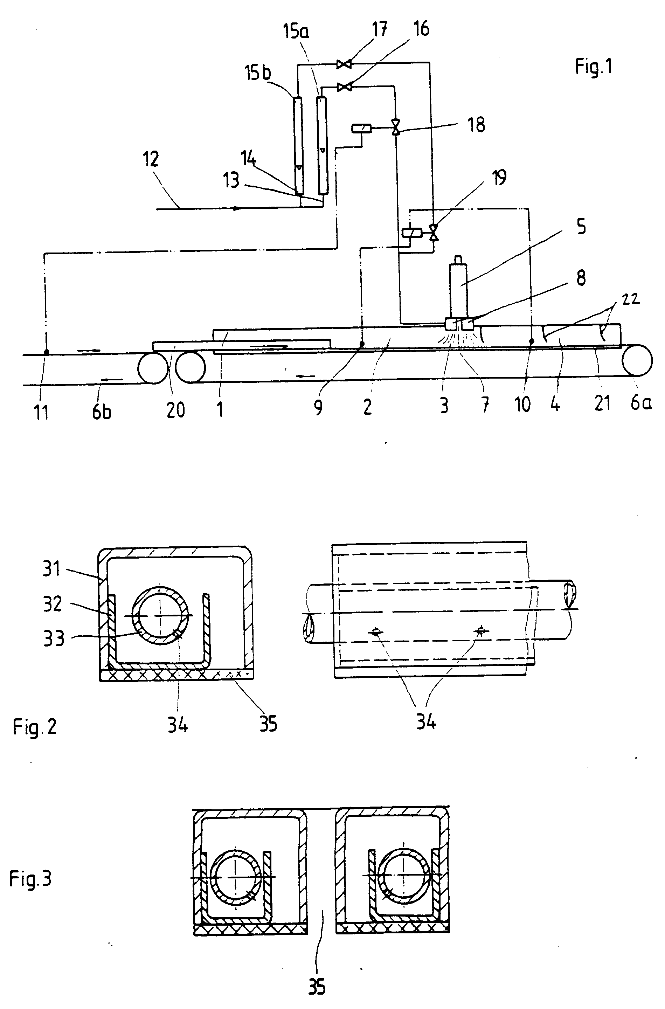

Figur 1 zeigt eine erfindungsgemäße Durchlaufvorrichtung zur Bestrahlung von Gegenständen mit Elektronenstrahlung mit einem Durchlaufkanal 1 bestehend aus Eingangszone 2, Bestrahlungszone 3 und Ausgangszone 4. Etwa in der Mitte des Durchlaufkanals 1 ist das Bestrahlungsgerät 5 über der Bestrahlungszone 3 angeordnet. Die zu bestrahlenden Gegenstände 20 werden mit einer Förderanlage 6a, z.B. einem Förderband, durch die Durchlaufvorrichtung befördert. Die Einleitung des Schutzgases erfolgt über zwei unmittelbar neben dem Elektronenstrahlkanal 7 angeordnete Gasverteiler 8. Ein Signalgeber 9, z.B. eine Photozelle, ist in der Eingangszone 2 der Durchlaufvorrichtung mit Abstand zur Bestrahlungszone 3 angeordnet. Ein weiterer Signalgeber 10 ist in der Ausgangszone der Durchlaufvorrichtung vorgesehen und ein dritter Signalgeber 11 ist bereits vor dem Zutritt in den Durchlaufkanal angeordnet. Über eine Schutzgaszuleitung 12, die sich in eine Basismengenzuleitung 13 und eine Zusatzmengenzuleitung 14 mit Mengenmessern 15a, 15b und Einstellventilen 16, 17 aufteilt, wird den Gasverteilern 8 Schutzgas zugeführt. Dabei wird die Basismengenzuleitung 13 und die Zusatzmengenzuleitung 14 jeweils durch Magnetventile 18, 19 geöffnet und geschlossen, wobei die Magnetventile 18, 19 von ihren zugehörigen Signalgebern 11, 9 oder 10 angesteuert werden. Prinzipiell ist anzumerken, daß es besonders vorteilhaft ist, wenn das Volumen des Durchlaufkanals möglichst klein gehalten wird, weil man dadurch einen besonders niedrigen Schutzgasbedarf erreicht. Dies kommt in der in Figur 1 dargestellten Anlage dadurch zum Ausdruck, daß die Förderanlage 6a nicht vollständig vom Vorrichtungsgehäuse 21 umfaßt wird.

Ablaufbeispiel eines Bestrahlungsvorgangs:

Ein zu bestrahlender Gegenstand 20 wird mittels einer Förderanlage 6b herangeführt, wobei durch den der Durchlaufvorrichtung vorgelagerten Signalgeber 11 die Zuführung der Basisgasmenge an Schutzgas durch das Magnetventil 18 ausgelöst wird. Als Schutzgas wird Stickstoff verwendet. Nach Eintreten des Gegenstandes in die Durchlaufvorrichtung wird beim Passieren des Signalgebers 9 in der Eingangszone 2 die Zusatzmenge an Schutzgas ausgelöst. Der Signalgeber 9 ist dabei soweit vor der Bestrahlungszone angeordnet, daß die durch den Gegenstand 20 mit herangeführte Luft - der Gegenstand wirkt im Durchlaufkanal 1 ähnlich wie ein Kolben - nicht in die Bestrahlungszone 3 eindringt. Die so ausgelöste

EP 0 330 705 B1

Zugabe an zusätzlichem Schutzgas dient also dazu, daß der Sauerstoffgehalt in der Bestrahlungszone während der Annäherung eines Gegenstandes nicht wesentlich steigt. Ebenso wird,wenn sich das Ende des durchlaufenden Gegenstandes dem Bestrahlungsbereichs nähert durch den Signalgeber 10 oder ein zweites Mal durch Signalgeber 9, letzteres insbesondere wenn es sich um lange Gegenstände handelt, eine zweite Zugabephase der Zusatzmenge ausgelöst. Dies dient ebenfalls dazu, das Eindringen von Sauerstoff aus dem Sog des durchlaufenden Gegenstandes in den Bestrahlungsbereich zu beschränken. Bei kurzen Gegenständen fallen die beiden Zugabephasen unter Umständen zusammen.

| Beispielswerte sind: | |
| --- | --- |
| Länge der Durchlaufvorrichtung: | 4 m |
| Länge der Eingangszone: | 2,5 m |
| Abstand der vorgelagerten Fotozelle von der Bestrahlungszone: | 3,5 m |
| Abstand der Fotozelle in der Eingangszone von der Bestrahlungszone: | 0,5 m |
| Tunnelhöhe: | 0,06 m |
| Basismenge: | 40 $Nm^3$/h |
| Zusatzmenge: | 20 $Nm^3$/h |
| Durchlaufzeit: | 10 sec. |
| Dauer der Zusatzzugabe: | 2 sec. |
| Sauerstoffgehalt in der Bestrahlungszone: | $\leq$ 60 ppm |
| Konstante Zugabemenge um Schutzatmosphäre etwa gleicher Reinheit zu bekommen: | ca. 60 $Nm^3$/h. |

Figur 2 zeigt einen Gasverteiler, der sich als besonders geeignet zur Durchführung des Verfahrens erwiesen hat. In einem etwa quadratischen Gehäuse 31 ist ein U-förmiges Verteilerkanal 32 angeordnet, in dem ein Verteilerrohr 33 mit Bohrungen 34 angebracht ist. Der Verteilerkanal ist nach oben geöffnet und an einem Schenkel mit der Gehäusewand verbunden. Auf der der Befestigungswand abgewandten Seite des Verteilerkanals besteht ein Abstand zum Gehäuse, durch den das eingeleitete Schutzgas nach unten durch die gasdurchlässige Sintermetallplatte 35 aus dem Gehäuse ausfließt. Dieser Verteiler zeichnet sich durch optimal gleichmäßige Verteilung des zugeführten Schutzgases aus.

Figur 3 zeigt schließlich eine besonders günstige Doppelanordnung von zwei eben beschriebenen Gasverteilern, wobei durch den zwischen beiden vorgesehenen Zwischenraum 35 die Strahlung in den Durchlaufkanal einfallen kann.

**Patentansprüche**

1. Verfahren zur Behandlung von aufeinanderfolgend eine Durchlaufeinrichtung durchlaufenden Einzelgegenständen mit Elektronenstrahlung und/oder elektromagnetischer Strahlung unter Schutzgas
   wobei die Durchlaufvorrichtung eine Eingangs-, eine Ausgangs- und eine Bestrahlungszone besitzt,
   dadurch gekennzeichnet,
   daß zu einer konstanten Basismenge an Schutzgas phasenweise, in Abhängigkeit vom Durchlauf der zu bestrahlenden Gegenstände durch die Durchlaufvorrichtung, eine Zusatzmenge an Schutzgas in der Weise zugeführt wird,
   daß eine Phase der Zugabe an Zusatzmenge vor dem Einlaufen der Gegenstände in die und, falls es sich durch die Geometrie der Gegenstände ergibt, auch vor dem Auslaufen der zu bestrahlenden Gegenstände aus der Bestrahlungszone ausgeführt wird,
   wobei Basismenge und Zusatzmenge in einem Mengenverhältnis von 1 : 1 bis 1 : 0.3 zueinander stehen.

2. Verfahren nach Anspruch 1, dadurch gekennzeichnet, daß die Dauer einer Phase für die Zugabe der Zusatzmenge an Schutzgas 5 bis 40 % der Durchlaufzeit eines Gegenstandes durch die Durchlaufvorrichtung beträgt.

3. Verfahren nach einem der Ansprüche 1 bis 2, dadurch gekennzeichnet, daß die Zufuhr der Zusatzmenge Schutzgas durch Signalgeber ausgelöst wird, die von den zu bestrahlenden Gegenständen beim Durchlauf der Vorrichtung ausgelöst werden.

4. Verfahren nach Anspruch 3, dadurch gekennzeichnet, daß durch einen Signalgeber mehrmals die Zufuhr einer Zusatzmenge Schutzgas ausgelöst wird.

4

EP 0 330 705 B1

**5.** Verfahren nach einem der Ansprüche 1 bis 4, dadurch gekennzeichnet, daß als Schutzgas Stickstoff verwendet wird.

**6.** Durchlaufvorrichtung zur Strahlungsbehandlung von Gegenständen mit einer Eingangs-, einer Ausgangs-und einer Bestrahlungszone, gekennzeichnet durch in der Eingangszone (2) und/oder Ausgangszone (4) angeordnete Signalgeber (9,10) zur Auslösung der Zugabe der Zusatzmenge an Schutzgas.

**7.** Durchlaufvorrichtung nach Anspruch 6, gekennzeichnet durch einen benachbart zur Bestrahlungszone (3) angeordneten Gasverteiler (8).

**8.** Durchlaufvorrichtung nach einem der Ansprüche 6 oder 7, dadurch gekennzeichnet, daß unmittelbar vor dem Bestrahlungsbereich (3) und unmittelbar anschließend ein Gasverteiler (8) angeordnet ist.

**9.** Durchlaufvorrichtung nach einem der Ansprüche 6 bis 8, mit einem Gasverteiler, gekennzeichnet durch ein Gehäuse (31), das nach unten durch eine gasdurchlässige Sintermetallplatte (35) abgeschlossen ist, worin sich ein Verteilerrohr (33) mit untenseitigen Bohrungen (34) in einem nach oben geöffneten, U-förmigen Verteilerkanal (32) befindet und der Verteilerkanal nach oben und seitlich mit Abstand zum Gehäuse angeordnet ist.

**10.** Durchlaufvorrichtung nach einem der Ansprüche 6 bis 9, dadurch gekennzeichnet, daß Abschließelemente (22) in der Ausgangszone (4) vorgesehen sind.

**Claims**

**1.** A process for treating individual objects, which pass consecutively through a continuous flow device, by electron radiation and/or electromagnetic radiation in a protective gas atmosphere, wherein the continuous flow device comprises an input zone, an output zone and an irradiation zone, characterised in that an additional quantity of protective gas is added to a constant basic quantity of protective gas in phases, in dependence upon the passage through the continuous flow device of the objects to be irradiated, and in such manner that a phase of the addition of the additional quantity is carried out prior to the entry into the irradiation zone of the objects to be irradiated and, if so determined by the geometrical configuration of the objects, also prior to their exit from the irradiation zone, wherein the basic quantity and additional quantity possess a ratio of 1 : 1 to 1 : 0.3 to one another.

**2.** A process as claimed in Claim 1, characterised in that the duration of a phase for the addition of the additional quantity of protective gas amounts to 5 to 40 % of the passage time of an object through the continuous flow device.

**3.** A process as claimed in one of Claims 1 to 2, characterised in that the supply of the additional quantity of protective gas is triggered by signal transmitters which are triggered by the objects to be irradiated when these pass through the device.

**4.** A process as claimed in Claim 3, characterised in that the supply of an additional quantity of protective gas is triggered several times by a signal transmitter.

**5.** A process as claimed in one of Claims 1 to 4, characterised in that nitrogen is used as protective gas.

**6.** A continuous flow device for the radiation treatment of objects, comprising an input zone, an output zone and an irradiation zone, characterised by signal transmitters (9, 10) which are arranged in the input zone (2) and/or output zone (4) and which serve to trigger the addition of the additional quantity of protective gas.

**7.** A continuous flow device as claimed in Claim 6, characterised by a gas distributor (8) arranged adjacent to the irradiation zone (3).

**8.** A continuous flow device as claimed in one of Claims 6 or 7, characterised in that a gas distributor (8) is arranged directly in advance of and directly following the irradiation zone (3).

5

9. A continuous flow device as claimed in one of Claims 6 to 8 comprising a gas distributor, characterised by a housing (31) which is closed at the bottom by a gas-permeable sintered metal plate (35), wherein a distributor pipe (33) provided with bores (34) on its underside is arranged in a U-shaped distributor channel (32) open at the top, and the distributor channel is spaced from the housing at the top and at the sides.

10. A continuous flow device as claimed in one of Claims 6 to 9, characterised in that closing elements (22) are provided in the output zone (4).

## Revendications

1. Procédé de traitement d'objets individuels, se déplaçant les uns à la suite des autre suivant une direction de transfert, avec un rayonnement électronique et ou un rayonnement électromagnétique, sous un gaz de protection, le dispositif de transfert comportant une entrée, une sortie et une zone d'irradiation, caractérisé en ce que, en référence à une quantité de base constante de gaz de protection, en procédant par phases et en fonction du cheminement des objets à irradier qui traversent le dispositif de transfert, une quantité d'appoint de gaz de protection est apportée, de manière qu'une phase de l'apport de la quantité d'appoint s'effectue avant l'entrée des objets dans la zone d'irradiation et, dans le cas où l'exige la configuration géométrique des objets, une phase d'apport s'effectue également avant la sortie des objets à irradier hors de la zone d'irradiation, où la quantité de base et la quantité d'appoint se situent dans un rapport quantitatif allant de 1:1 à 1:0,3.

2. Procédé selon la revendication 1, caractérisé en ce que la durée d'une phase pour l'apport de la quantité d'appoint de gaz de protection est de 5 à 40% du temps de passage d'un objet dans le dispositif de transfert.

3. Procédé selon l'une des revendications 1 à 2, caractérisé en ce que l'amenée de la quantité d'appoint de gaz de protection est déclenchée par des transmetteurs de signaux qui sont déclenchés par les objets à irradier, lors de leur passage dans le dispositif.

4. Procédé selon la revendication 3, caractérisé en ce que l'amenée d'une quantité d'appoint d'un gaz de protection est effectuée à plusieurs reprises par l'intermédiaire d'un transmetteur de signal.

5. Procédé selon l'une des revendications 1 à 4, caractérisé en ce que l'on utilise de l'azote comme gaz de protection.

6. Dispositif de transfert pour le traitement par irradiation d'objets avec une entrée, une sortie et une zone d'irradiation, caractérisé par un transmetteur de signal (9,10), disposé dans la zone d'entrée (2) et/ou la zone de sortie (4), en vue de déclencher l'apport de la quantité d'appoint de gaz de protection.

7. Dispositif de transfert selon la revendication 6, caractérisé par un distributeur ou répartiteur de gaz (8) disposé au voisinage de la zone d'irradiation (3).

8. Dispositif de transfert selon l'une des revendications 6 ou 7, caractérisé en ce qu'un distributeur de gaz (8) est disposé, immédiatement avant la zone d'irradiation (3) et immédiatement après.

9. Dispositif de transfert selon l'une des revendications 6 à 8, avec un distributeur de gaz, caractérisé par un carter (31), délimité vers le bas par une plaque en métal fritté (35) perméable aux gaz, où se trouve un tube de distribution (33) avec des perforations de face inférieurs (34), dans un canal de distribution en U (32), ouvert vers le haut, et le canal de distribution est disposé vers le haut et latéralement, à distance du carter.

10. Dispositif de transfert selon l'une des revendications 6 à 9, caractérisé en ce que des éléments de confinement (22) sont disposés dans la zone de sortie (4).

Fig. 1

Fig. 2

Fig. 3